# EUROPÄISCHE PATENTSCHRIFT

(11) **EP 0 455 871 B1**
(45) Veröffentlichungstag und Bekanntmachung des Hinweises auf die Patenterteilung: **01.03.1995**
(21) Anmeldenummer: 90123657.0
(22) Anmeldetag: 08.12.1990
(51) Int. Cl.: B04B 13/00

(54) **Laboratoriums-Zentrifuge**
Laboratory centrifuge
Centrifugeuse de laboratoire

(30) Priorität: 05.05.1990 DE 4014431
(43) Veröffentlichungstag der Anmeldung: 13.11.1991
(73) Patentinhaber: Heraeus Instruments GmbH, 63450 Hanau (DE)
(72) Erfinder: Uhlendorf, Rüdiger, W-3402 Niemetal-Löwenhagen (DE); Köhn, Heinz-Gerhard, Dr., W-3402 Dransfeld (DE)
(74) Vertreter: Kühn, Hans-Christian

(56) Entgegenhaltungen:
- DE-A- 3 730 725
- DE-B- 1 297 035
- US-A- 3 982 162

## Beschreibung

Die vorliegende Erfindung betrifft eine Laboratoriums-Zentrifuge mit einem Antriebs-Motor, der in seinem Motor-Gehäuse orientiert befestigt ist, und mit einer Einrichtung zur berührungslosen Erfassung der Drehzahl der Antriebs-Welle des Motors, wobei diese Einrichtung einen Impulsgeber aufweist, der mit einem rotierenden Teil des Motors oder einem mit dem Motor in Drehverbindung stehenden Teil mechanisch gekoppelt ist, und mit einem Impulsaufnehmer, der ortsfest mit dem Gehäuse verbunden ist, wobei Impulsgeber und Impulsaufnehmer derart zueinander positioniert sind, daß der Impulsgeber bei Betrieb des Motors in dem Impulsaufnehmer eine Signal-Folge erzeugt, deren Zeitfunktion von der Drehzahl abhängig ist, wobei in den Strahlengang einer einen Lichtsender und einen Lichtempfänger aufweisende Lichtschranke ein Element der Welle hineinragt, derart, daß sie bei einer Drehung der Welle den Strahlengang der Lichtschranke wechselweise unterbricht und freigibt.

Zentrifugen mit derartigen Einrichtungen zur berührungslosen Erfassung der Drehzahl der Antriebs-Welle des Motors sind allgemein bekannt. Gerade beim Zentrifugieren ist es wesentlich, die genauen Drehzahlen und damit die erforderlichen Zentrifugalkräfte beim Zentrifugieren einzustellen. Für eine solche Drehzahlmessung sind verschiedene Systeme bekannt. Ein solches System ist in der DE-B-1 297 035 offenbart. Hier ist an einer rotationssymmetrischen Verkleidung, die die Teile des Motors umgibt, eine waagerecht angeordnete Scheibe befestigt, die längs ihres Umfanges eine Anzahl von Löchern aufweist. Die Löcher bewegen sich bei Drehung des Rotors an einem optischen Detektor vorbei, der aus einer unterhalb der Scheibe angeordneten Lichtquelle und einer oberhalb der Scheibe angeordneten Photozelle besteht. Bei Durchgang der Löcher der Scheibe durch den Strahlengang des Detektors werden Impulse erzeugt, die der Drehzahlmessung und -regelung dienen. Diese Scheibe trägt allerdings zur Erhöhung der notwendigen Masse des Rotors bei und muß extrem genau gefertigt sein, um Unwuchten zu vermeiden. Ein weiteres solches System verwendet eine sogenannte Index-Scheibe, das heißt eine Scheibe die auf die Antriebswelle des Motors aufgesetzt wird und die um den Umfang verteilt äquidistante Schlitze aufweist. Diese Scheibe läuft durch eine Hall-Sonde hindurch und erzeugt mit der Drehung der Welle eine drehzahlabhängige Impulsfolge. Ein weiteres System setzt ebenfalls eine solche Index-Scheibe ein, die über optische Elemente, beispielsweise eine Leuchtdiode und einen Phototransistor die Schlitzfolge der Index-Scheibe abgreift. Eine weitere Einrichtung zur berührungslosen Erfassung der Drehzahl der Antriebs-Welle des Motors setzt einen magnetisierbaren Ring ein, der wechselweise unterschiedlich magnetisiert ist. Zum Abgreifen dieser Magnetisierungsfolge wird ebenfalls eine Hall-Sonde als Impulsaufnehmer eingesetzt. Schließlich ist aus der Produktinformation "Suprafuge 22" der Heraeus Sepatech GmbH (2M 8.87/N Kr) eine Zentrifuge beschrieben, die mit einer automatischen Rotorerkennung ausgerüstet ist. Diese Rotorerkennung besteht aus einem Ringsegment auf der Unterseite des Rotors, der um den Umfang verteilt Balken mit unterschiedlichem Reflektionsvermögen aufweist. Durch die Art der unterschiedlichen Flächen kann der Rotortyp über einen Mikrocomputer automatisch ermittelt werden. Zum Abgreifen der einzelnen Felder werden auch hier optische Abtastelemente, die ortsfest in einem den Rotor umgebenen Zentrifugenkessel angeordnet sind, eingesetzt. Über solche Reflektionsfelder kann ebenfalls über die zeitabhängige Impulsfolge die Drehzahl ermittelt werden.

Eine ebensolche Drehzahleinrichtung ist auch aus US 3982162 bekannt. Hier ist eine Zentrifuge offenbart, an deren Rotorunterseite eine ringförmige Markierung, bestehend aus reflektierenden und nichtreflektierenden Teilen, angeordnet ist. Von einer unterhalb des Rotors angeordneten Lichtquelle ist ein Lichtstrahl auf die ringförmige Markierung gerichtet, der von den reflektierenden Teilen der ringförmigen Markierung auf einen ebenfalls unter dem Rotor angeordneten Empfänger gelenkt wird. Das den Empfänger erreichende Lichtsignal wird unterbrochen, wenn der von der Lichtquelle ausgesendete Lichtstrahl auf einen nichtreflektierenden Bereich trifft. Aus der Länge der derart erzeugten Signale kann die Rotationsgeschwindigkeit des Zentrifugenrotors bestimmt werden. Eine Schaltungsanordnung zur Auswertung derart erzeugter Signale ist in DE 37 30 725 A1 offenbart.

Den vorstehenden Einrichtungen ist gemeinsam, daß sie einerseits einen am Rotor unmittelbar angeordneten Impulsgeber aufweisen - dies gilt auch für die Index-Scheibe - mit einem Impulsaufnehmer, der unmittelbar in der Nähe des Rotors ortsfest positioniert sein muß, um die Messwerte abzugreifen. Diese bekannten Einrichtungen müssen also gerade dort angeordnet werden, wo ohnehin bei einer Zentrifuge nur wenig Platz zur Verfügung steht. Weiterhin sind solche Einrichtungen aufwendig in ihrer Konstruktion und erfordern entweder ein zusätzliches Bauteil oder eine zusätzliche Bearbeitung des Rotors.

Der vorliegenden Erfindung liegt nun die Aufgabe zugrunde, eine Einrichtung zur berührungslosen Erfassung der Drehzahl der Antriebs-Welle des Motors einer Zentrifuge anzugeben, die insbesondere hinsichtlich des Impulsgebers keine zusätzlichen Bauteile erfordert, die möglichst wenig Störeinflüsse auf den eigentlichen Rotor, insbesondere bei hohen Drehzahlen, mit sich bringt und die eine einfache Konstruktion im Hinblick auf eine einfache Justierung ermöglicht.

Diese Aufgabe wird bei einer Zentrifuge der eingangs beschriebenen Art daduch gelöst, daß das in den Strahlengang hineinreichende Element das abtriebsseitige Ende der Welle ist, welche somit als Impulsgeber arbeitet, wobei dieses Ende der Welle mindestens eine Aussparung aufweist. Weder an dem Rotor der Zentrifuge noch an irgendwelchen sonstigen sich drehenden Teilen werden zusätzliche Bauteile zur Drehzahlerfassung angeordnet; der Impulsgeber wird nur durch das abtriebsseitige Ende der Antriebs-Welle des Motors gebildet, die eine Aussparung aufweist. Diese Aussparung bzw. der dadurch gebildete Impulsgeber befindet sich in einem Bereich der Zentrifuge, der sehr weit von dem eigentlichen Rotor entfernt ist und somit keine Störeinflüsse hervorruft. Üblicherweise ist an der Unterseite des Rotors, das heißt, am antriebsseitigen Ende, ausreichender Raum vorhanden, um dort den Impulsaufnehmer in Form der Lichtschranke anzuordnen. Da die Welle des Motors dazu eingesetzt wird, die Lichtschranke wechselweise zu unterbrechen und freizugeben und damit eine drehzahlabhängige Impulsfolge hervorzurufen, das heißt, die Lichtschranke in geringem radialen Abstand zur Achse der Antriebs-Welle angeordnet werden kann, ist kein großer Justieraufwand erforderlich, um die Lichtschranke so zur Antriebs-Welle zu positionieren, daß gewährleistet ist, daß die Antriebs-Welle den Strahlengang der Lichtschranke unterbricht oder freigibt. Weiterhin ist gewährleistet, daß bei einem Wechsel des Rotors, z.B. beim Beladen des Rotors oder bei dem Ersetzen des Rotors durch einen anderen Rotortyp die Teile der Drehzahlerfassung, das heißt, der Impulsgeber und der Impulsaufnehmer, unberührt bleiben. Diese Bauteile sind an der Unterseite des Motors völlig geschützt und für den Anwender der Zentrifuge praktisch unzugänglich positioniert.

Für die Aussparungen an dem abtriebsseitigen Ende der Welle haben sich verschiedene Ausführungen als vorteilhaft erwiesen. Die Aussparung kann zum einen als parallel zur Achse verlaufenden Schlitz ausgebildet sein, wobei im Hinblick auf eine einfache Fertigung der Schlitz zur Stirnfläche der Welle hin geöffnet ist. Dieser Schlitz gibt mit jeder Drehung die Lichtschranke frei, wobei der Lichtstrahl durch diesen Schlitz von der Photo-Diode auf den Photo-Transistor fällt, während er in weiteren Winkelstellungen diese Lichtschranke unterbricht. Eine weitere bevorzugte Möglichkeit, die Lichtschranke zu öffnen bzw. zu schließen ist durch eine Bohrung gegeben, die quer zur Achse der Welle durch die Welle hindurchführt. Schließlich kann die Antriebswelle an ihrem abtriebsseitigen Ende an der Außenseite abgeflacht werden, so daß dieser abgeflachte Teil ebenfalls die Lichtschranke freigibt. Falls diese Abflachung nur geringfügig zur Achse hin ausgebildet ist, wird die Lichtschranke seitlich zur Achse der Antriebswelle versetzt positioniert. In jedem Fall ist gewährleistet, daß an der Antriebseinheit selbst keine zusätzlichen Bauteile erforderlich sind. Die Ausnehmung an dem abtriebsseitigen Ende der Welle kann in einfacher Weise gefertigt werden, da üblicherweise Motoren für Zentrifugen ohnehin spezielle Antriebswellen aufweisen und beispielsweise im CNC-Fertigungsverfahren nur sehr wenige bzw. nur ein zusätzlicher Fertigungsschritt hierzu erforderlich sind. Als besonders vorteilhaft erweist es sich, daß keinerlei Vormontage am Rotor zwecks Drehzahlermittlung erforderlich ist und somit eine Minimierung der Lagerhaltung durch Wegfall von bisher üblichen Montagekomponenten und daraus zusammengesetzten Teilen zu erzielen ist.

Um auch die Lichtschranke konstruktiv einfach aufzubauen und sie leicht montierbar zu gestalten, werden sowohl Lichtsender als auch Lichtempfänger auf einer Träger-Platte angeordnet, so daß sie in fester Zuordnung zueinander stehen. Diese Träger-Platte kann dann in einfacher Weise unterhalb des Motors befestigt werden, wobei diese Träger-Platte bevorzugt an einem Flanschteil des Motor-Gehäuses zentriert zur Achse der Welle gehalten ist. Die Antriebs-Motoren einer Zentrifuge werden üblicherweise ohnehin mit einem speziell gefertigten unteren Gehäuseteil ausgestattet, um die Antriebseinheit mit dem unteren Gehäuseteil auf einer Bodenplatte zu befestigen derart, daß die Antriebs-Welle vertikal nach oben ausgerichtet verläuft.

In einer weiteren vorteilhaften Weiterbildung wird als Träger-Platte eine Leiter-Platte verwendet, die sowohl mit dem Lichtsender und dem Lichtempfänger bestückt sind und gleichzeitig die Leiterbahnen für die Stromzuleitung und Ableitung aufweist. Gleichzeitig kann diese Leiter-Platte einen Steckverbinder besitzen um den Lichtsender und den Lichempfänger mit einer zentralen Versorgungs- und Auswerteeinheit zu verbinden.

Um Störeinflüsse, die durch den Motor oder sonstige sich drehende Teile der Zentrifuge hervorgerufen werden könnten, wird die Leiter-Platte mit einem die Leiterbahnen abschirmenden, elektrisch leitenden Gitter versehen, das geerdet bzw. mit Potential des Motor-Gehäuses verbunden wird. Um diese Erdung bzw. Verbindung vorzunehmen, ohne zusätzliche Anschlüsse zu benötigen, kann das Gitter direkt mit dem Gehäuse elektrisch leitend verbunden werden, wobei in einer besonders einfachen konstruktiven Ausbildung diese Kontaktierung des Gitters mit dem Gehäuse direkt über die Befestigungsschrauben vorgenommen wird, mit denen die Leiter-Platte an dem Motor-Gehäuse befestigt wird.

Falls, wie bereits vorstehend beschrieben wurde, das untere Motor-Gehäuse mit einem Flanschteil zur Aufnahme der Leiter-Platte ausgestattet wird, ist eine Montage und Justierung der Lichtschranke an dem Motor-Gehäuse möglich, in dem die Träger-Platte oder Leiter-Platte direkt an diesem Flanschteil befestigt wird, wobei in einer solchen Anordnung das abtriebsseitige Ende der Antriebs-Welle exakt zwischen der Lichtschranke positioniert werden kann. Als Lichtsender hat sich eine Leucht-Diode und als Lichtempfänger ein Photo-Transistor gut bewährt; solche Bauteile sind handelsüblich und sehr kostengünstig.

Weitere Einzelheiten und Merkmale der Erfindung ergeben sich aus den Unteransprüchen sowie der nachfolgenden Beschreibung eines Ausführungsbeispieles anhand der Zeichnung. In der Zeichnung zeigt:
- Fig. 1: schematisch eine Zentrifuge im Längsschnitt mit Antriebseinheit, Rotor und eine Einrichtung zur berührungslosen Erfassung der Drehzahl,
- Fig. 2: eine Leiter-Platte mit einem darauf angeordneten Impulsaufnehmer, wie er in der Zentrifuge nach Fig. 1 eingesetzt ist und
- Fig. 3 bis 5: verschiedene Ausführungsformen des abtriebsseitigen Enden der Antriebs-Welle des Antriebs-Motors der Zentrifuge

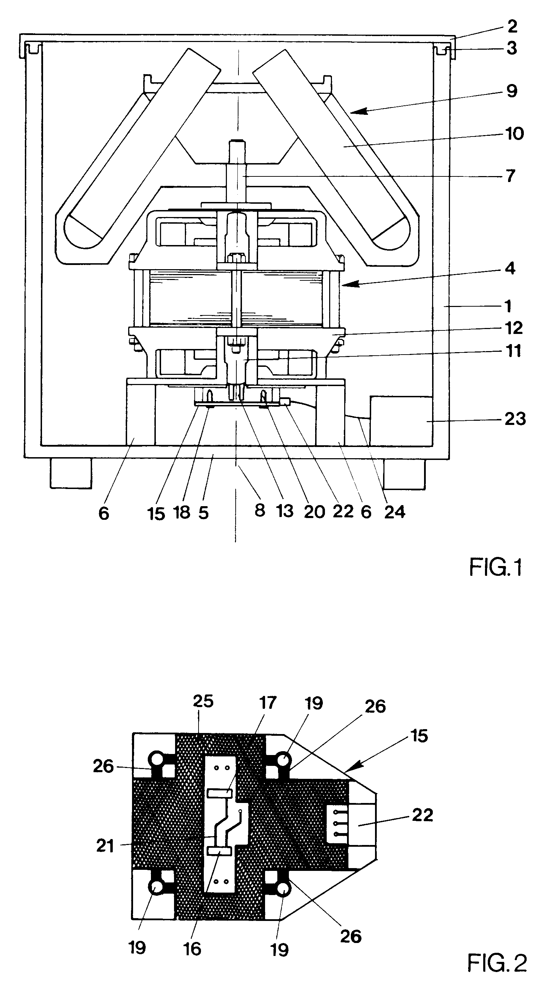

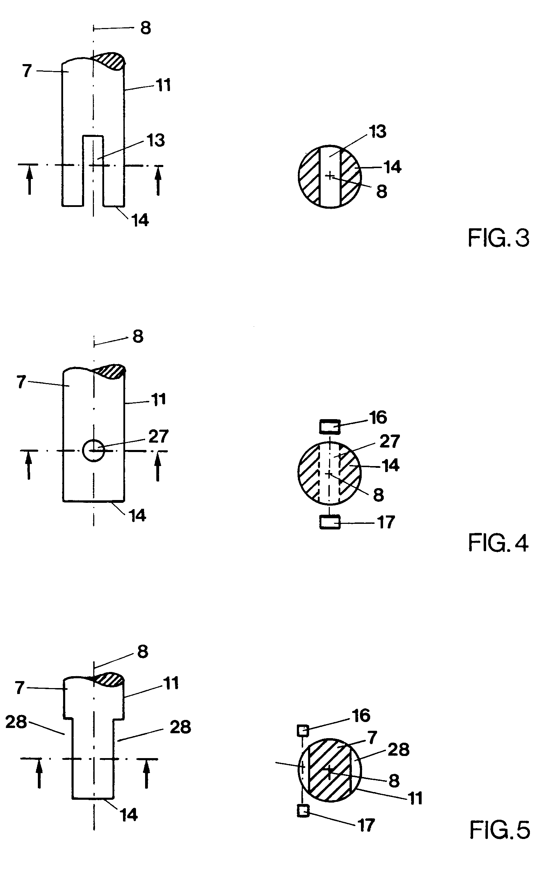

Die Zentrifuge, wie sie in Fig. 1 dargestellt ist, weist ein Gehäuse 1 auf, das an der Oberseite mit einem Deckel 2 verschlossen ist. Der Deckel 2 ist über eine in den Gehäuserand eingelegte Dichtlippe 3 gegenüber dem Gehäuse 1 abgedichtet. Innerhalb des Gehäuses befindet sich ein Antriebs-Motor 4, der derart an der Bodenplatte 5 über schwingungsdämpfende Lagerteile 6 befestigt ist, daß eine Antriebs-Welle 7 bzw. deren Achse 8 vertikal verlaufend ausgerichtet ist. Auf dieser Antriebs-Welle 7 ist ein Festwinkel-Rotor 9 aufgesetzt, der mehrere Aufnahmen für Probenröhrchen 10 über seinen Umfang verteilt aufweist. Das abtriebsseitige Ende 11 der Antriebs-Welle 7 steht über ein unteres Flanschteil 12, mit dem der Motor an den Lagerteilen 6 aufgesetzt ist, geringfügig vor. Dieses abtriebsseitige Ende 11 besitzt einen Schlitz 13 der sich von der Stirnseite 14 der Welle 7 in Richtung der Achse 8 erstreckt, wie dies auch anhand der Fig. 3 zu erkennen ist. Zentrisch zu der Achse 8 ist, auf einer Leiter-Platte 15 montiert, wie sie die Fig. 2 zeigt, eine Lichtschranke mit einer als Lichtsender diendenden Leucht-Diode 16 und einem als Lichtempfänger dienenden Photo-Transistor 17 befestigt. Diese Leiter-Platte ist mittels Schrauben 18 an vier Öffnungen 19 an dem unteren Flanschteil 12 befestigt. Dieses Flanschteil 12 besitzt für die Befestigung der Leiter-Platte 15 mit den Schrauben 18 vier Sacklochbohrungen 20 auf. Durch die Anordnung der Leiter-Platte 15 an dem unteren Flanschteil 12 ist eine exakte Positionierung der durch die Leucht-Diode 16 und dem Photo-Transistor 17 gebildete Lichtschranke gegeben. Gleichzeitig ist die Leiter-Platte geschützt an der Unterseite des Motors befestigt, so daß ein Anwender auch beim Austauschen des Rotors 9 zu dieser Einrichtung zur berührungslosen Erfassung der Drehzahl der Antriebs-Welle 7 keinen Zugang hat. Die Leiter-Platte 15 trägt neben der Leucht-Diode 16 und dem Photo-Transistor 17 die notwendigen Leiterbahnen 21 zur Stromversorgung, wobei in Fig. 2 nur ein Teil der Leiterbahnen 21 auf der Oberseite der Leiter-Platte 15 zu sehen sind, während weitere Leiterbahnen auf der Unterseite der Leiter-Platte aufgebracht sind. Die Leiterbahnen enden in einem Kontaktstecker 22, in dem eine zu einer Auswerteinheit 23 führende Versorgungsleitung 24 eingesteckt wird. Diese Auswerteinheit 23 kann in einem beliebigen Bereich des Zentrifugen-Gehäuses 1 angeordnet werden. Auf der Leiter-Platte sind weiter Leiterbahnen in Form eines Gitters 25 verteilt, die die Leiterbahnen 21 zur Stromversorgung der Lichtschranke umgeben. Dieses Gitter 25 ist geerdet und bildet eine Abschirmung für die einzelnen Leiterbahnen 21. Dieses Gitter 25 wird, wie die Fig. 2 zeigt, über Anschlußbahnen 26, die zu den Öffnungen 19 der Leiter-Platte 15 führen, mit den Schrauben 18 mit dem unteren Flanschteil 12 des Motors 4 verbunden, so daß dieses Gitter 24 an dem Flanschteil 12 geerdet wird, ohne daß hierzu zusätzliche Bauteile erforderlich wären.

Fig. 4 zeigt eine Ausführungsform des abtriebsseitigen Endes 11 der Antriebs-Welle 7, in der die Aussparung durch eine die Mantelfläche der Welle 7 durchdringende Bohrung 26 gebildet wird. Dieser Bohrung 26 ist die Lichtschranke mit der Leucht-Diode 16 und dem Photo-Transistor 17 zugeordnet.

Mit jeder Drehung der Antriebs-Welle 7 um 180° wird die Lichtschranke geöffnet bzw. geschlossen, so daß mit jeder vollen Umdrehung der Antriebswelle zwei Impulse erzeugt werden.

In der Ausführung nach Fig. 5 ist die Aussparung an dem abtriebsseitigen Ende 11 der Antriebs-Welle 7 durch eine abgeflachte Mantelfläche 28 gebildet, die seitlich versetzt zur Achse 8 der Antriebs-Welle 7 verläuft. Entsprechend ist die Leucht-Diode 16 und der Photo-Transistor 17 seitlich zur Achse versetzt positioniert, so daß, wie in der gezeigten Stellung, die Lichtschranke freigegeben wird. Mit einem weiteren Drehen der Welle wird die Lichtschranke unterbrochen, bis mit einer Drehung um 180° die gegenüberliegende, abgeflachte Mantelfläche 28 die Lichtschranke wieder freigibt. Mit jeder Umdrehung werden auch hier zwei Impulse erzeugt, wobei aus Symmetriegründen die gegenüberliegenden, abgeflachten Mantelflächen 28 gewählt sind. Eine einzige Abflachung wäre ebenfalls möglich, um die Lichtschranke zu unterbrechen und zu öffnen, wobei dann nur pro Umdrehung der Welle ein Impuls erzeugt wird.

Um die Einrichtung zur berührungslosen Erfassung der Drehzahl der Antriebs-Welle des Motors 4 der Zentrifuge zu montieren, wird lediglich an dem unteren Flanschteil 12 die Leiter-Platte 15 mit den darauf fest angeordneten Teilen der Lichtschranke, der Leucht-Diode 16 und dem Photo-Transistor 17 montiert. Diese Leiter-Platte ist anschließend nur über den Anschlußstecker 22 mit der Auswerteeinheit 23 über die Versorgungsleitung 24 zu verbinden.

## Patentansprüche

1. Laboratoriums-Zentrifuge mit einem Antriebs-Motor (4), der in seinem Motor-Gehäuse orientiert befestigt ist, und mit einer Einrichtung zur berührungslosen Erfassung der Drehzahl der Antriebs-Welle (7) des Motors (4), wobei diese Einrichtung einen Impulsgeber aufweist, der mit einem rotierenden Teil des Motors (4) oder einem mit dem Motor (4) in Drehverbindung stehenden Teil mechanisch gekoppelt ist, und mit einem Impulsaufnehmer (17), der ortsfest mit dem Gehäuse (1) verbunden ist, wobei Impulsgeber und Impulsaufnehmer (17) derart zueinander positioniert sind, daß der Impulsgeber bei Betrieb des Motors (4) in dem Impulsaufnehmer (17) eine Signalfolge erzeugt, deren Zeitfunktion von der Drehzahl abhängig ist, wobei in den Strahlengang einer einen Lichtsender (16) und einen Lichtempfänger (17) aufweisende Lichtschranke ein Element der Welle (7) hineinragt, derart, daß sie bei einer Drehung der Welle (7) den Strahlengang der Lichtschranke wechselweise unterbricht und freigibt, dadurch gekennzeichnet, daß das in den Strahlengang hineinreichende Element das abtriebsseitige Ende (11) der Welle (7) ist, welche somit als Impulsgeber arbeitet, wobei dieses Ende (11) der Welle (7) mindestens eine Aussparung (13; 27; 28) aufweist.

2. Zentrifuge nach Anspruch 1, dadurch gekennzeichnet, daß das abtriebsseitige Ende (11) der Welle (7) als Aussparung einen parallel zur Achse verlaufenden Schlitz (13) aufweist, der zur Stirnfläche (14) der Welle (7) geöffnet ist

3. Zentrifuge nach Anspruch 1, dadurch gekennzeichnet, daß das abtriebsseitige Ende (11) der Welle (7) als Aussparung eine die Mantelfäche durchdringende Bohrung (27) aufweist.

4. Zentrifuge nach Anspruch 2 oder 3, dadurch gekennzeichnet, daß der Schlitz (13) oder die Bohrung (27) in radialer Richtung verlaufen.

5. Zentrifuge nach Anspruch 1, dadurch gekennzeichnet, daß das abtriebsseitige Ende (11) der Welle (7) als Aussparung eine abgeflachte Mantelfäche (28) aufweist.

6. Zentrifuge nach einem der Ansprüche 1 bis 5, dadurch gekennzeichnet, daß der Lichtsender und der Lichtempfänger auf einer Trägerplatte (15) angeordnet sind.

7. Zentrifuge nach Anspruch 5, dadurch gekennzeichnet, daß die Trägerplatte (15) mit ihrer Platten-Ebene senkrecht zur Achse (8) der Antriebs-Welle (7) verläuft.

8. Zentrifuge nach Anspruch 7, dadurch gekennzeichnet, daß die Träger-Platte als Leiter-Platte (15) mit einer Zuleitung für die Lichtquelle (16) und einer Ableitung für den Lichtempfänger (17) ausgebildet ist.

9. Zentrifuge nach Anspruch 8, dadurch gekennzeichnet, daß die Leiter-Platte ein die Leiterbahnen (21) abschirmendes, elektrisch leitendes Gitter (25) aufweist.

10. Zentrifuge nach Anspruch 9, dadurch gekennzeichnet, daß das Gitter (25) elektrisch leitend mit dem Gehäuse (1) verbunden ist.

11. Zentrifuge nach Anspruch 10, dadurch gekennzeichnet, daß die Kontaktierung des Gitters (25) über Befestigungs-Schrauben (18), mit denen die Leiter-Platte (15) an dem Motor-Gehäuse befestigt ist, erfolgt.

12. Zentrifuge nach einem der Ansprüche 6 bis 11, dadurch gekennzeichnet, daß die Träger- oder Leiter-Platte (15) an einem Flanschteil (12) des Motor-Gehäuses zentriert zur Achse (8) der Welle (7) gehalten ist.

13. Zentrifuge nach einem der Ansprüche 1 bis 12, dadurch gekennzeichnet, daß der Lichtsender eine Leucht-Diode (16) und der Lichtempfänger ein Photo-Transistor (17) ist.

## Claims

1. A laboratory centrifuge with a drive motor (4), which is secured in an oriented manner in its motor housing, and with a device for measuring without contact the speed of the drive shaft (7) of the motor (4), in which this device has an impulse transmitter, which is mechanically coupled with a rotating part of the motor (4) or a part in rotary connection with the motor (4), and with an impulse receiver (17), which is fixedly connected with the housing (1), in which the impulse transmitter and the impulse receiver (17) are positioned with respect to each other such that the impulse transmitter on operation of the motor (4) produces a signal series in the impulse receiver (17), the time function of which is dependent on the speed, in which an element of the shaft (7) projects into the path of rays of a photoelectric cell having a light transmitter (16) and a light receiver (17), such that on a rotation of the shaft (7) it alternately interrupts and frees the path of rays of the photoelectric cell, characterised in that the element extending into the path of rays is the end (11) of the shaft (7) on the output side, which therefore operates as an impulse transmitter, in which this end (11) of the shaft (7) has at least one recess (13; 27; 28).

2. A centrifuge according to Claim 1, characterised in that the end (11) of the shaft (7) on the output side has as a recess a slit (13) running parallel to the axis, which slit is open to the end face (14) of the shaft (7).

3. A centrifuge according to Claim 1, characterised in that the end (11) of the shaft (7) on the output side has as a recess a bore (27) penetrating the surface.

4. A centrifuge according to Claim 2 or 3, characterised in that the slit (13) or the bore (27) run in radial direction.

5. A centrifuge according to Claim 1, characterised in that the end (11) of the shaft (7) on the output side has as a recess a flattened surface (28).

6. A centrifuge according to one of Claims 1 to 5, characterised in that the light transmitter and the light receiver are arranged on a carrier plate (15).

7. A centrifuge according to Claim 5, characterised in that the carrier plate (15) runs with its plate plane vertical to the axis (8) of the drive shaft (7).

8. A centrifuge according to Claim 7, characterised in that the carrier plate is constructed as a conductor plate (15) with a feed line for the light source (16) and an outlet line for the light receiver (17).

9. A centrifuge according to Claim 8, characterised in that the conductor plate has an electrically conducting grid (25) shielding the conducting paths (21).

10. A centrifuge according to Claim 9, characterised in that the grid (25) is connected with the housing (1) in an electrically conducting manner.

11. A centrifuge according to Claim 10, characterised in that the contacting of the grid (25) takes place via fastening screws (18), with which the conductor plate (15) is fastened to the motor housing.

12. A centrifuge according to one of Claims 6 to 11, characterised in that the carrier- or conductor plate (15) is held on a flange part (12) of the motor housing in a centered manner to the axis (8) of the shaft (7).

13. A centrifuge according to one of Claims 1 to 12, characterised in that the light transmitter is a light-emitting diode (16) and the light receiver is a phototransistor (17).

## Revendications

1. Centrifugeuse de laboratoire comportant un moteur (4) d'entraînement, qui est fixé de manière orientée dans son boîtier, et un dispositif sans contact de détection de la vitesse de l'arbre (7) d'entraînement du moteur (4), ce dispositif présentant un générateur d'impulsions qui est mécaniquement accouplé avec une partie rotative du moteur (4) ou avec une partie en liaison de rotation avec le moteur (4), et comportant un capteur (17) d'impulsions qui est relié solidairement au boîtier (1), le générateur d'impulsions et le capteur (17) d'impulsions étant placés l'un par rapport à l'autre de telle manière que pendant le fonctionnement du moteur (4), le générateur d'impulsions engendre dans le capteur (17) d'impulsions une succession de signaux dont la fonction de temps dépend de la vitesse de rotation, un élément de l'arbre (7) pénétrant dans le trajet des rayons d'un barrage photoélectrique qui comporte un émetteur lumineux (16) et un récepteur lumineux (17), de telle sorte que lors d'une rotation de l'arbre (7), cet élément interrompt et libère alternativement le trajet des rayons du barrage photoélectrique, caractérisée en ce que l'élément qui pénètre dans le trajet des rayons est l'extrémité (11) côté sortie de l'arbre (7) qui fonctionne ainsi comme générateur d'impulsions, cette extrémité (11) de l'arbre (7) présentant au moins un évidement (13 ; 27 ; 28).

2. Centrifuge selon la revendication 1, caractérisée en ce que l'extrémité (11) côté sortie de l'arbre (7) présente comme évidement une fente (13) parallèle à l'axe, qui est ouverte vers la face frontale (14) de l'arbre (7).

3. Centrifuge selon la revendication 1, caractérisée en ce que l'extrémité (11) côté sortie de l'arbre (7) présente comme évidement un perçage (27) traversant la surface enveloppe.

4. Centrifuge selon l'une ou l'autre des revendications 2 et 3, caractérisée en ce que la fente (13) ou le perçage (27) s'étendent en direction radiale.

5. Centrifuge selon la revendication 1, caractérisée en ce que l'extrémité (11) côté sortie de l'arbre (7) présente comme évidement une surface enveloppe (28) aplatie.

6. Centrifuge selon l'une quelconque des revendications 1 à 5, caractérisée en ce que l'émetteur lumineux et le récepteur lumineux sont agencés sur une plaque support (15).

7. Centrifuge selon la revendication 5, caractérisée en ce que la plaque support (15) s'étend avec son plan de plaque perpendiculairement à l'axe (8) de l'arbre (7) d'entraînement.

8. Centrifuge selon la revendication 7, caractérisée en ce que la plaque support est réalisée sous forme de carte imprimée (15) avec une ligne d'amenée pour la source lumineuse (16) et une ligne de sortie pour le récepteur lumineux (17).

9. Centrifuge selon la revendication 8, caractérisée en ce que la carte imprimée présente une grille (25) conductrice qui blinde les circuits conducteurs (21).

10. Centrifuge selon la revendication 9, caractérisée en ce que la grille (25) est reliée de manière conductrice avec le boîtier (1).

11. Centrifuge selon la revendication 1, caractérisé en ce que la mise en contact de la grille (25) est effectuée par l'intermédiaire de vis (18) de fixation avec lesquelles la carte imprimée (15) est fixée sur le boîtier du moteur.

12. Centrifuge selon l'une quelconque des revendications 6 à 11, caractérisée en ce que la plaque support ou carte imprimée (15) est maintenue sur un élément de bride (12) du boîtier du moteur, en étant centrée par rapport à l'axe (8) de l'arbre.

13. Centrifuge selon l'une quelconque des revendications 1 à 12, caractérisée en ce que l'émetteur lumineux est une diode (16) lumineuse et en ce que le récepteur lumineux est un phototransistor (17).
